# EUROPEAN PATENT APPLICATION

(11) **EP 4 657 168 A1**
(43) Date of publication of application: **03.12.2025**
(21) Application number: 25179801.3
(22) Date of filing: 30.05.2025
(51) Int. Cl.: G03G 15/00, H04N 1/00

(54) **IMAGE FORMING APPARATUS**

(30) Priority: 31.05.2024 JP 2024088592
(71) Applicant: KYOCERA Document Solutions Inc., Osaka-shi, Osaka 540-8585 (JP)
(72) Inventor: Yamada, Masayuki, Osaka-shi, 540-8585 (JP); Okauchi, Yoshifumi, Osaka-shi, 540-8585 (JP)
(74) Representative: Plougmann Vingtoft a/s

(57) **Abstract**

A support mechanism (4) supports a display unit (3) such that the display unit (3) is rotatable about a specific straight line between a horizontally-long attitude and a vertically-long attitude. The support mechanism (4) supports the display unit (3) in a state where, when the display unit (3) is in the horizontally-long attitude, a right side surface of the display unit (3) is set along a vertical plane provided along a right side surface of a main body (1). The support mechanism (4) supports the display unit (3) such that the display unit (3) is rotatable counterclockwise from the horizontally-long attitude to the vertically-long attitude. When the display unit (3) is in the horizontally-long attitude, a distance from the right side surface of the display unit (3) to the specific straight line is equal to or larger than a distance from a lower surface of the display unit (3) to the specific straight line.

## Description

### INCORPORATION BY REFERENCE

This application is based upon and claims the benefit of priority from the corresponding Japanese Patent Application No. 2024-088592 filed on May 31, 2024, the entire contents of which are incorporated herein by reference.

### BACKGROUND

The present disclosure relates to an image forming apparatus including a mechanism which rotatably supports a display unit.

An image forming apparatus such as a printer, a copying machine, or a multifunction peripheral includes a display unit including a horizontally-long screen. The image forming apparatus causes the display unit to display various menu screens, a print target image, or the like.

### SUMMARY

An image forming apparatus according to an aspect of the present disclosure includes a main body, a display unit, and a first support mechanism. The main body incorporates therein a printing device which forms an image on a sheet. The display unit includes a rectangular screen and has a rectangular outline corresponding to the screen. The first support mechanism is fixed to the main body and supports the display unit such that the display unit is rotatable about a specific straight line provided along a thickness direction of the display unit. The first support mechanism supports the display unit such that the display unit is rotatable about the specific straight line between a horizontally-long attitude in which the outline becomes horizontally long and a vertically-long attitude in which the outline becomes vertically long. The first support mechanism further supports the display unit in a state where, when the display unit is in the horizontally-long attitude, a right side surface of the display unit is set along a vertical plane provided along a right side surface of the main body when seen from a front surface side of the main body. The first support mechanism further supports the display unit such that the display unit is rotatable counterclockwise from the horizontally-long attitude to the vertically-long attitude when seen from the front surface side of the main body. The first support mechanism further supports the display unit such that the display unit is rotatable clockwise from the vertically-long attitude to the horizontally-long attitude when seen from the front surface side of the main body. When the display unit is in the horizontally-long attitude, a distance from the right side surface of the display unit to the specific straight line is equal to or larger than a distance from a lower surface of the display unit to the specific straight line when seen from the front surface side of the main body.

An image forming apparatus according to another aspect of the present disclosure includes the main body, the display unit, and a second support mechanism. The second support mechanism is fixed to the main body and supports the display unit such that the display unit is rotatable about a specific straight line provided along a thickness direction of the display unit. The second support mechanism supports the display unit such that the display unit is rotatable about the specific straight line between a horizontally-long attitude in which the outline becomes horizontally long and a vertically-long attitude in which the outline becomes vertically long. The second support mechanism further supports the display unit in a state where, when the display unit is in the horizontally-long attitude, a right side surface of the display unit is set along a vertical plane provided along a right side surface of the main body when seen from a front surface side of the main body. The second support mechanism further supports the display unit such that the display unit is rotatable clockwise from the horizontally-long attitude to the vertically-long attitude when seen from the front surface side of the main body. The second support mechanism further supports the display unit such that the display unit is rotatable counterclockwise from the vertically-long attitude to the horizontally-long attitude when seen from the front surface side of the main body. When the display unit is in the horizontally-long attitude, a distance from the right side surface of the display unit to the specific straight line is equal to or larger than a distance from an upper surface of the display unit to the specific straight line when seen from the front surface side of the main body.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

Fig. 1 is a front view of an image forming apparatus according to an embodiment;
Fig. 2 is a first side view of the image forming apparatus according to the embodiment (a state where a display unit is in a forward attitude);
Fig. 3 is a second side view of the image forming apparatus according to the embodiment (a state where the display unit is in an upward attitude);
Fig. 4 is a diagram showing a schematic internal configuration of a main body in the image forming apparatus according to the embodiment;
Fig. 5 is a first perspective view of a support mechanism in the image forming apparatus according to the embodiment (a state where the support mechanism supports the display unit in a horizontally-long attitude);
Fig. 6 is a second perspective view of the support mechanism in the image forming apparatus according to the embodiment (a state where the support mechanism supports the display unit in a vertically-long attitude);
Fig. 7 is a perspective view of the support mechanism from which a unit support member and a leaf spring have been removed in the image forming apparatus according to the embodiment;
Fig. 8 is a front view of the support mechanism from which the unit support member has been removed in the image forming apparatus according to the embodiment;
Fig. 9 is a perspective view of a base member and a swing member of the support mechanism in the image forming apparatus according to the embodiment;
Fig. 10 is a perspective view of a rotation member of the support mechanism seen from a front side in the image forming apparatus according to the embodiment;
Fig. 11 is a perspective view of the rotation member of the support mechanism seen from a rear side in the image forming apparatus according to the embodiment;
Fig. 12 is a perspective view of an intervention member of the support mechanism seen from the front side in the image forming apparatus according to the embodiment;
Fig. 13 is a perspective view of the intervention member of the support mechanism seen from the rear side in the image forming apparatus according to the embodiment;
Fig. 14 is a perspective view of a reinforcement member of the support mechanism in the image forming apparatus according to the embodiment;
Fig. 15 is a diagram showing a first example of a position of a second axis line of the support mechanism in the image forming apparatus according to the embodiment;
Fig. 16 is a diagram showing a second example of the position of the second axis line of the support mechanism in the image forming apparatus according to the embodiment;
Fig. 17 is a diagram showing a third example of the position of the second axis line of the support mechanism in the image forming apparatus according to the embodiment; and
Fig. 18 is a diagram showing a fourth example of the position of the second axis line of the support mechanism in the image forming apparatus according to the embodiment.

### DETAILED DESCRIPTION

Hereinafter, an embodiment of the present disclosure will be described with reference to the drawings. It is noted that the following embodiment is an example of embodying the present disclosure and does not limit the technical scope of the present disclosure.

### [Configuration of image forming apparatus 10]

An image forming apparatus 10 according to the embodiment is capable of executing print processing for forming an image on a sheet 9.

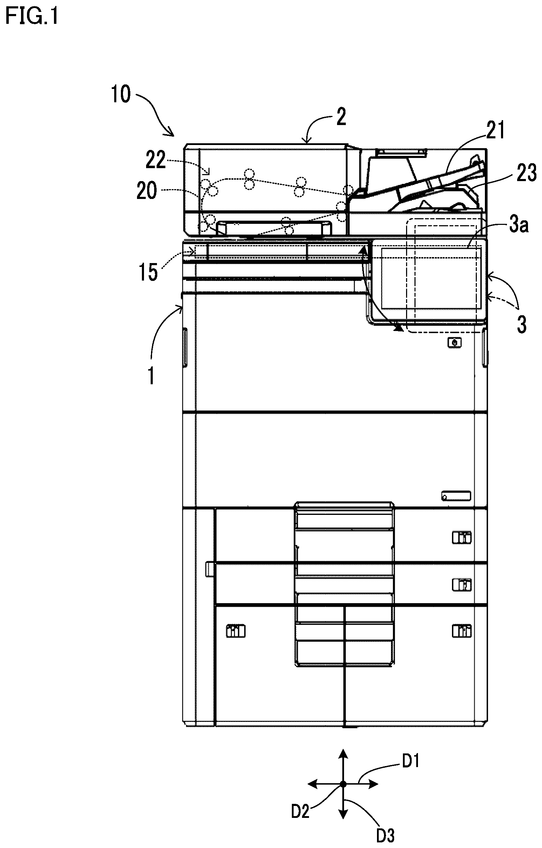

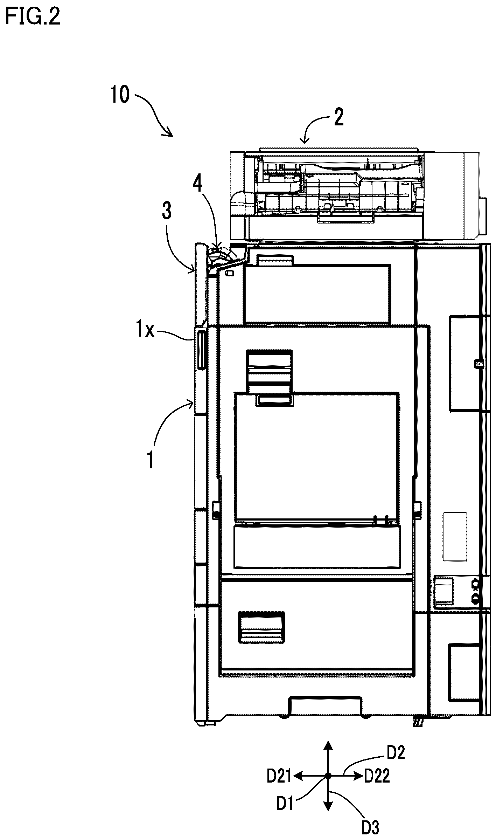

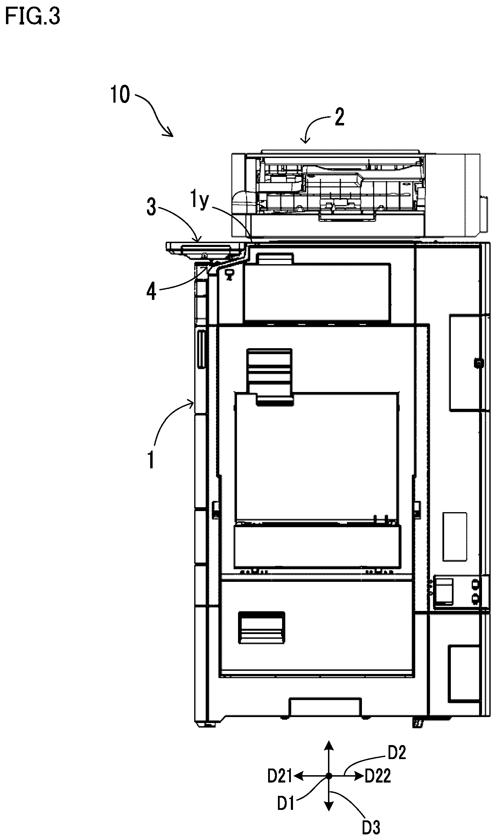

The image forming apparatus 10 includes a display unit 3 capable of displaying various types of information (see Fig. 1 to Fig. 3). The image forming apparatus 10 further includes a support mechanism 4 which supports the display unit 3 (see Fig. 2 and Fig. 3).

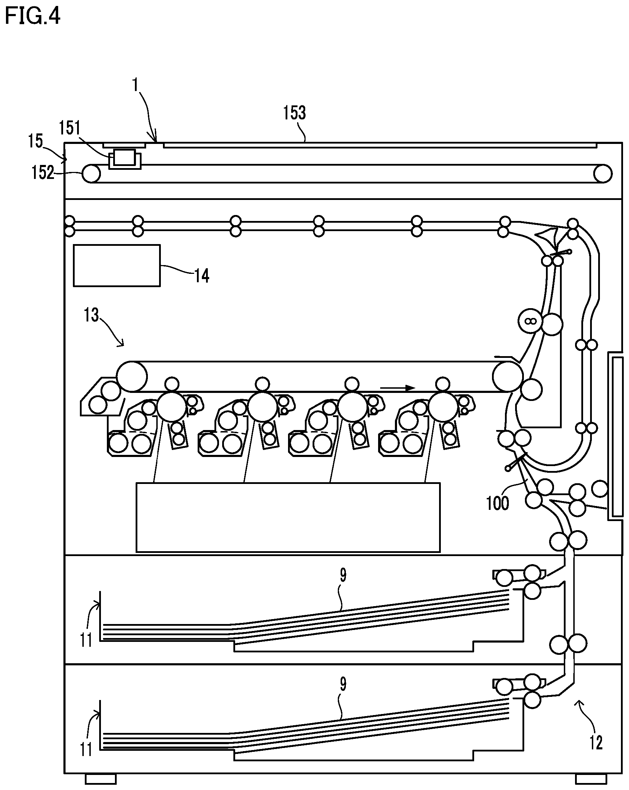

The image forming apparatus 10 includes a main body 1, a document sheet conveying device 2, and the display unit 3. The main body 1 includes a housing which incorporates therein main portions of the image forming apparatus 10, and members attached to the housing. The main body 1 incorporates therein a sheet storing portion 11, a sheet conveying device 12, a printing device 13, and a control device 14 (see Fig. 4). In the present embodiment, the main body 1 also incorporates therein an image reading device 15.

The document sheet conveying device 2 is coupled to an upper portion of the main body 1 (see Fig. 1 to Fig. 3). The document sheet conveying device 2 is supported so as to be movable between a closing position that covers a specific area on an upper surface of the main body 1 and an opening position that opens the specific area. The display unit 3 is coupled to a portion of the upper portion of the main body 1 that is provided along a front surface of the main body 1 by the support mechanism 4 (see Fig. 2 and Fig. 3).

The document sheet conveying device 2 includes a document sheet supply tray 21, a document sheet conveying mechanism 22, and a document sheet discharge tray 23 (see Fig. 1). The document sheet conveying mechanism 22 feeds a document sheet on the document sheet supply tray 21 to a conveying path 20, and further discharges the document sheet from the conveying path 20 onto the document sheet discharge tray 23.

The sheet storing portion 11 is capable of storing a plurality of sheets 9. The sheet conveying device 12 sends out the sheets 9 one by one from the sheet storing portion 11 to a conveying path 100, and further conveys the sheets 9 along the conveying path 100. Further, the sheet conveying device 12 sends out the sheet 9 from the conveying path 100 to a subsequent device (not shown).

The printing device 13 executes the print processing on the sheet 9 conveyed along the conveying path 100. In the example shown in Fig. 4, the printing device 13 executes the print processing using electrophotography.

It is noted that the printing device 13 may be a device that executes the print processing using other methods such as an inkjet method.

The image reading device 15 includes an image sensor 151 which reads an image from the document sheet conveyed by the document sheet conveying device 2 (see Fig. 4). The image reading device 15 further includes a scanning mechanism 152 and a platen glass 153. The scanning mechanism 152 causes the image sensor 151 to move along a lower surface of the platen glass 153. Thus, the image sensor 151 can read an image from the document sheet on the platen glass 153.

The control device 14 controls the document sheet conveying device 2, the image reading device 15, the sheet conveying device 12, the printing device 13, and the display unit 3. The control device 14 includes a processor, a secondary storage device, a signal interface, a communication device, and the like (all of which are not shown).

The processor controls each device by executing computer programs stored in the secondary storage device. The processor acquires detection results of various sensors via the signal interface. In addition, the processor outputs control signals to a device to be controlled via the signal interface.

The processor receives a print request from another device via the communication device. Further, the processor causes the sheet conveying device 12 and the printing device 13 to execute the print processing corresponding to the print request.

The display unit 3 is capable of displaying various types of information and images. For example, the display unit 3 is a touch panel unit including a panel display device and a touch panel. The panel display device is a liquid crystal display panel, an organic electroluminescence display, or the like.

The display unit 3 includes a rectangular screen 3a and has a rectangular outline corresponding to an outer shape of the screen 3a (see Fig. 1). Shapes of the screen 3a and the outline of the display unit 3 may be a rectangle in which some or all of the four corners are chamfered. The control device 14 causes the display unit 3 to display various menu screens, print target images, or the like. Fig. 1 shows a state where the display unit 3 is supported by the support mechanism 4 in an attitude in which the screen 3a becomes horizontally long.

Incidentally, a user may wish to display the entire print target image that is vertically long on the display unit 3.

For example, the print target image may be reduced such that a length of the print target image in a longitudinal direction fits within a length of a short side of the screen 3a to be displayed on the screen 3a. In this case, the displayed image becomes too small, which lowers visibility of the print target image.

Meanwhile, a situation where the print target image is displayed on the screen 3a while being rotated 90 degrees is also conceivable. In this case, the displayed image is displayed in a direction different from the original direction, and thus the visibility of the print target image is lowered.

As will be described later, the support mechanism 4 supports the display unit 3 in a state where an orientation of the display unit 3 can be changed. Thus, it becomes possible to display the print target image on the rectangular screen 3a with high visibility, regardless of which of the vertically-long image and the horizontally-long image the print target image is.

### [Configuration of support mechanism 4]

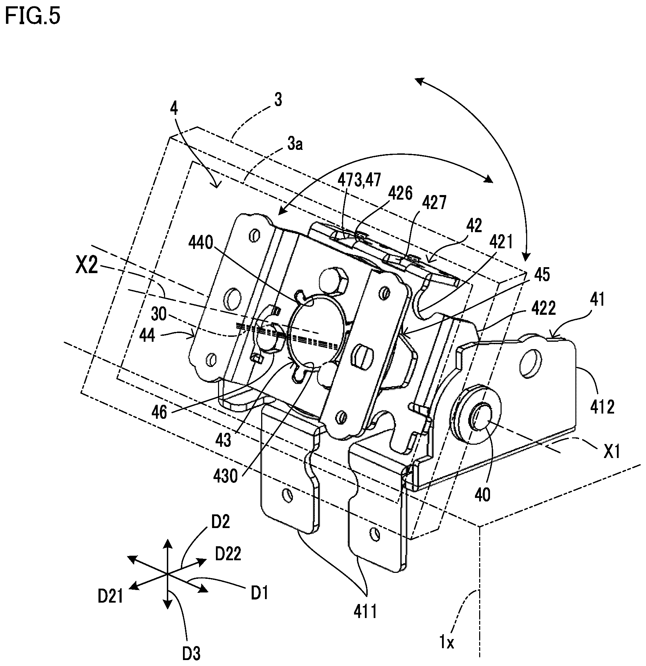

Hereinafter, a configuration of the support mechanism 4 will be described with reference to Fig. 5 to Fig. 14. The support mechanism 4 is fixed to the main body 1 and supports the display unit 3.

In the figures, a width direction D1 is a left-right direction of the main body 1, a depth direction D2 is a front-rear direction of the main body 1, and an up-down direction D3 is an up-down direction of the main body 1. In addition, a forward direction D21 is a direction that is directed from a back surface of the main body 1 toward a front surface, and a rearward direction D22 is a direction that is directed from the front surface of the main body 1 toward the back surface.

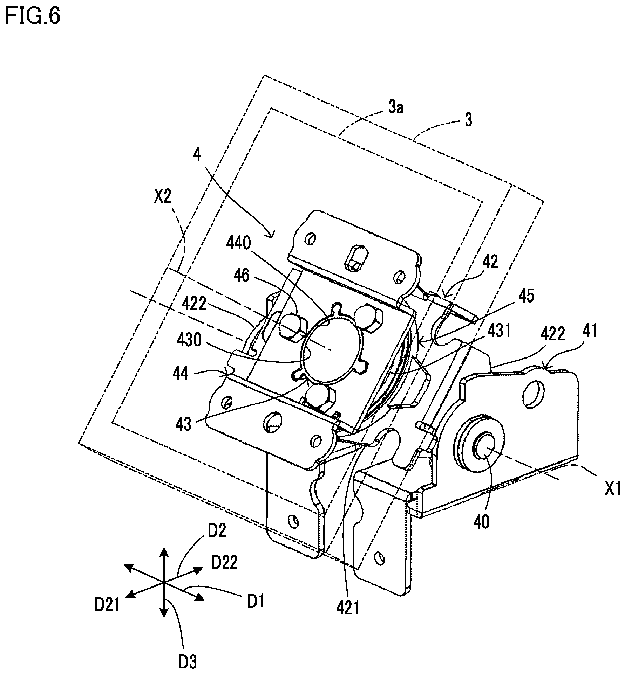

The support mechanism 4 includes a base member 41, a support shaft 40, a swing member 42, a rotation member 43, a unit support member 44, and a plurality of bolts 46 (see Fig. 5 and Fig. 6).

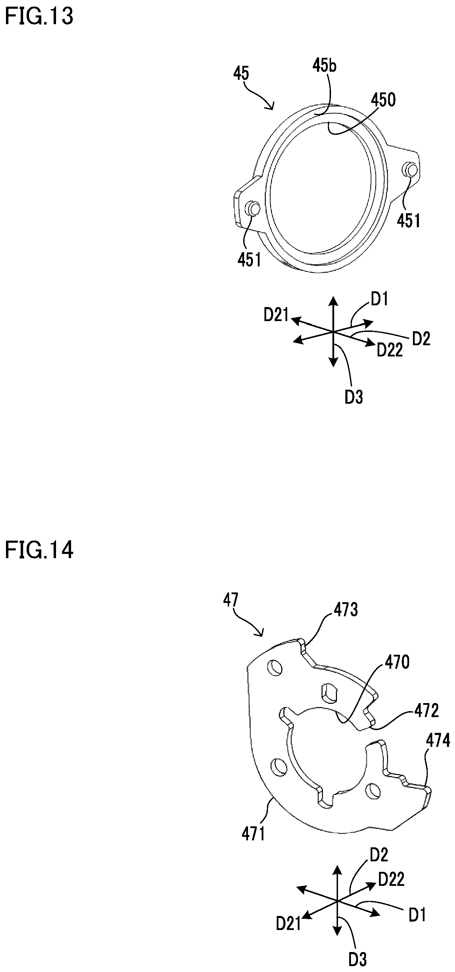

The support mechanism 4 further includes an intervention member 45 and one or more leaf springs 48 (see Fig. 5 to Fig. 8). The support mechanism 4 further includes a reinforcement member 47 (see Fig. 5 and Fig. 14). The leaf spring 48 is an example of an elastic member.

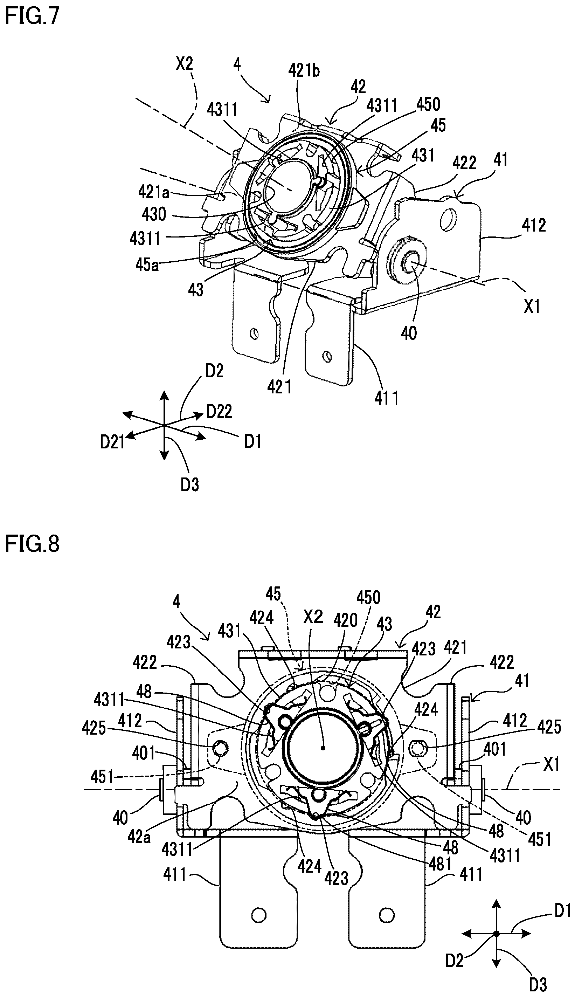

Fig. 5 and Fig. 6 are each a perspective view of the support mechanism 4. Fig. 7 shows the support mechanism 4 from which the unit support member 44, the plurality of bolts 46, and the leaf springs 48 have been removed. Fig. 8 is a front view of the support mechanism 4 from which the unit support member 44 has been removed.

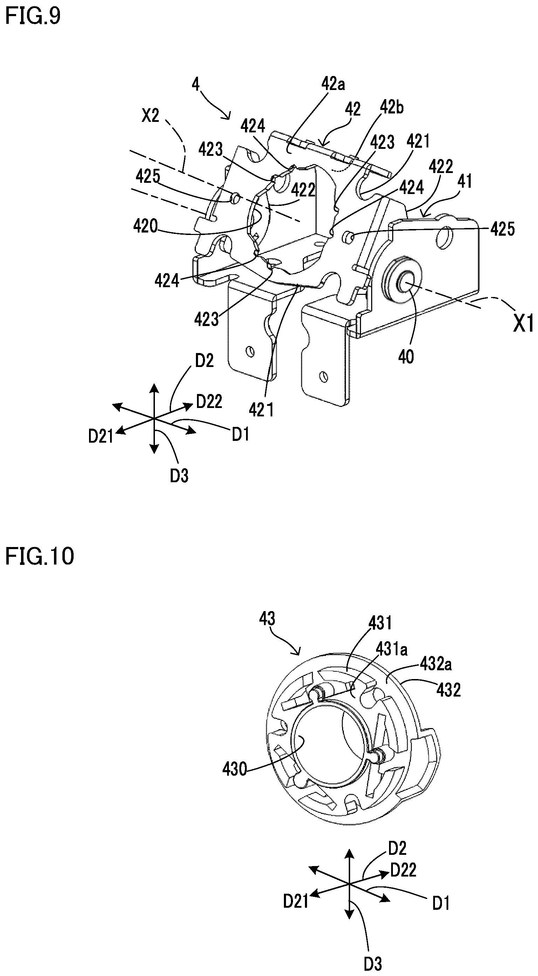

Fig. 9 is a perspective view of the base member 41 and the swing member 42 in the support mechanism 4. Fig. 9 shows the support mechanism 4 from which the unit support member 44, the rotation member 43, the plurality of bolts 46, and the leaf springs 48 have been removed.

The base member 41 is fixed to a portion of the upper portion of the main body 1 that is provided along the front surface of the main body 1 (see Fig. 5). In the present embodiment, the base member 41 is constituted of a pair of members arranged side by side in the width direction D1.

The base member 41 includes to-be-fixed portions 411 and a pair of vertical plate portions 412 formed to extend upwardly from the to-be-fixed portions 411. The to-be-fixed portions 411 are fixed to the main body 1 by screws or bolts (not shown). Thus, the base member 41 is fixed to the main body 1.

The support shaft 40 is supported by the pair of vertical plate portions 412 while being provided along the width direction D1. In the present embodiment, the support shaft 40 is constituted of a pair of shaft members arranged in a straight line along the width direction D1.

The swing member 42 is supported by the support shaft 40 while being rotatable about a first axis line X1. The first axis line X1 is a straight line that passes through a center of the support shaft 40. In other words, the first axis line X1 is a straight line provided along the width direction D1.

The swing member 42 includes a front plate portion 421, a pair of to-be-supported portions 422, and a first opening 420 (see Fig. 6 and Fig. 9). The front plate portion 421 is formed in a plate shape parallel to the first axis line X1. The first opening 420 is formed to penetrate the front plate portion 421 in a thickness direction.

The thickness direction of the front plate portion 421 is also a thickness direction of the display unit 3 to be attached to the unit support member 44. In descriptions below, the thickness direction of the front plate portion 421 and the display unit 3 will be referred to as a unit thickness direction.

The unit thickness direction is a direction that intersects with the width direction D1. The front plate portion 421 is formed in a plate shape orthogonal to the unit thickness direction. It is noted that the width direction D1 is an example of a first direction, and the unit thickness direction is an example of a second direction intersecting with the first direction.

The pair of to-be-supported portions 422 are formed to extend from the front plate portion 421 to positions at which the pair of to-be-supported portions 422 intersect with the first axis line X1. The pair of to-be-supported portions 422 are rotatably supported by the support shaft 40. Thus, the swing member 42 can rotate about the first axis line X1.

The rotation member 43 is supported by the front plate portion 421 of the swing member 42 while being rotatable about a second axis line X2 (see Fig. 5 to Fig. 7). The second axis line X2 is a straight line extending along the unit thickness direction.

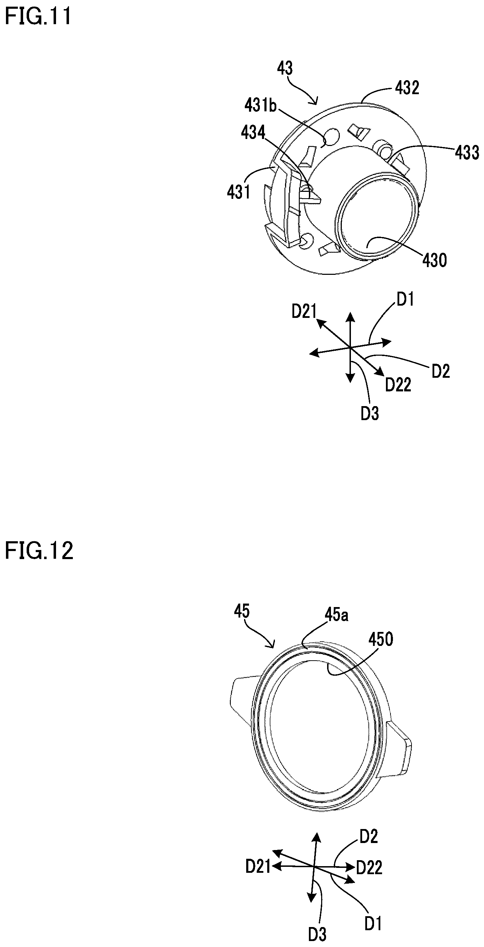

The rotation member 43 includes an insertion portion 431 and a flange portion 432 (see Fig. 10 and Fig. 11). The insertion portion 431 is a portion that is inserted into the first opening 420 of the front plate portion 421. The flange portion 432 is formed to protrude from an outer edge of the insertion portion 431 along a back surface 421b of the front plate portion 421 (see Fig. 9 to Fig. 11).

The flange portion 432 comes into contact with the back surface 421b of the front plate portion 421. The flange portion 432 restricts the movement of the rotation member 43 toward the front surface 421a side of the front plate portion 421.

The insertion portion 431 includes a third opening 430 that penetrates the insertion portion 431 in the unit thickness direction. Further, the insertion portion 431 includes one or more spring retention portions 4311 that retain the one or more leaf springs 48 (see Fig. 7 and Fig. 8).

In the present embodiment, the support mechanism 4 includes three leaf springs 48, and the insertion portion 431 includes three spring retention portions 4311 (see Fig. 8). The leaf springs 48 are respectively retained by the spring retention portions 4311. Each of the leaf springs 48 includes a curved portion that protrudes outwardly from an outer edge of the insertion portion 431.

The intervention member 45 is a member that is sandwiched between the front plate portion 421 of the swing member 42 and the unit support member 44 (see Fig. 5, Fig. 6, Fig. 12, and Fig. 13). A back surface 45b of the intervention member 45 is in contact with the front surface 421a of the front plate portion 421, and a front surface 45a of the intervention member 45 is in contact with the unit support member 44 (see Fig. 7, Fig. 12, and Fig. 13).

The intervention member 45 includes a second opening 450 penetrating in the unit thickness direction. The second opening 450 communicates with the first opening 420 of the insertion portion 431 in the unit thickness direction (see Fig. 8). In Fig. 8 , the intervention member 45 is illustrated in virtual lines (dash-dot-dot lines).

The intervention member 45 includes a pair of convex portions 451 that protrude toward the front plate portion 421 side (see Fig. 8 and Fig. 13). Meanwhile, a pair of latch holes 425 are formed in the front plate portion 421 (see Fig. 7 and Fig. 8). The pair of convex portions 451 are respectively inserted into the pair of latch holes 425 (see Fig. 8). The pair of latch holes 425 latch the pair of convex portions 451 to thus prevent the intervention member 45 from rotating in conjunction with the rotation of the rotation member 43.

The insertion portion 431 of the rotation member 43 is inserted into the first opening 420 of the front plate portion 421 and the second opening 450 of the intervention member 45 (see Fig. 7 and Fig. 8).

The unit support member 44 is coupled to the rotation member 43 by the plurality of bolts 46 (see Fig. 5 and Fig. 6). Thus, the unit support member 44 can rotate about the second axis line X2 together with the rotation member 43.

The display unit 3 is fixed to the unit support member 44 by screws, bolts, or the like (not shown) (see Fig. 5 and Fig. 6). In Fig. 5 and Fig. 6, the display unit 3 is illustrated in virtual lines.

Accordingly, the display unit 3 is, together with the unit support member 44, the rotation member 43, and the swing member 42, rotatable about the first axis line X1. Thus, a so-called tilt function is realized. The display unit 3 is rotatable between a forward attitude in which the screen 3a faces toward the front of the main body 1 and an upward attitude in which the screen 3a faces upward.

Fig. 1 and Fig. 2 each show the state where the display unit 3 is in the forward attitude. Fig. 3 shows the state where the display unit 3 is in the upward attitude.

In the present embodiment, the forward attitude of the display unit 3 is an attitude in which the screen 3a faces the forward direction D21 along a horizontal direction (see Fig. 1 and Fig. 2). On the other hand, the upward attitude of the display unit 3 is an attitude in which the screen 3a faces an upward vertical direction (see Fig. 3). In other words, the display unit 3 is rotatable within a range of 90 degrees about the first axis line X1.

In the example shown in Fig. 2, when the display unit 3 is in the forward attitude, the front surface of the display unit 3 is arranged along an extension line of a surface of a front exterior panel 1x of the main body 1.

In the example shown in Fig. 3, when the display unit 3 is in the upward attitude, the front surface of the display unit 3 is arranged along an extension line of a surface of an upper exterior panel 1y of the main body 1.

Furthermore, the display unit 3 is, together with the unit support member 44 and the rotation member 43, rotatable about the second axis line X2. The display unit 3 is rotatable between a horizontally-long attitude in which the screen 3a becomes horizontally long and a vertically-long attitude in which the screen 3a becomes vertically long (see Fig. 5 and Fig. 6). Thus, a so-called pivot function is realized.

The virtual lines in Fig. 5, and Fig. 1 show the display unit 3 in the horizontally-long attitude. The virtual lines in Fig. 1 and Fig. 6 show the display unit 3 in the vertically-long attitude. The display unit 3 is rotatable within the range of 90 degrees about the second axis line X2.

As described above, the display unit 3 is rotatable between the horizontally-long attitude and the vertically-long attitude. Therefore, the user can change the orientation of the display unit 3 according to an orientation of an image to be displayed on the display unit 3. It is noted that the horizontally-long attitude is also an attitude in which the outline of the display unit 3 becomes horizontally long. Similarly, the vertically-long attitude is also an attitude in which the outline of the display unit 3 becomes vertically long.

When causing the display unit 3 to display an entire print target image, the control device 14 causes the display unit 3 to display the print target image in an orientation in which long sides of the print target image are provided along long sides of the screen 3a.

When the print target image is a horizontally-long image, the user can rotate the display unit 3 so that the display unit 3 takes the horizontally-long attitude. On the other hand, when the print target image is a vertically-long image, the user can rotate the display unit 3 so that the display unit 3 takes the vertically-long attitude. Thus, visibility of the print target image is improved.

Furthermore, the user can rotate the display unit 3 between the forward attitude and the upward attitude according to his/her height. Thus, visibility of various images such as the print target image displayed on the display unit 3 is improved.

In the present embodiment, the base member 41, the swing member 42, and the unit support member 44 are each a metal member formed of iron, aluminum, or the like. On the other hand, the rotation member 43 and the intervention member 45 are each a synthetic resin member.

When the display unit 3 rotates about the second axis line X2, the unit support member 44 is rubbed against the front surface 45a of the intervention member 45, and the flange portion 432 of the rotation member 43 is rubbed against the back surface 421b of the front plate portion 421.

In other words, when the display unit 3 rotates about the second axis line X2, the metal member is rubbed against the synthetic resin member, but the metal members are not rubbed against each other. Thus, the rotation member 43 rotates smoothly.

Further, a pair of annular members 401 are respectively interposed between the pair of vertical plate portions 412 of the base member 41 and the pair of to-be-supported portions 422 of the swing member 42 (see Fig. 8). The pair of annular members 401 are each a synthetic resin member.

The support shaft 40 penetrates through the pair of annular members 401. Thus, the pair of annular members 401 are supported by the support shaft 40.

When the display unit 3 rotates about the first axis line X1, the pair of to-be-supported portions 422 are rubbed against the pair of annular members 401. At this time, the pair of to-be-supported portions 422 are not rubbed against the pair of vertical plate portions 412.

In other words, when the display unit 3 rotates about the first axis line X1, the metal member is rubbed against the synthetic resin member, but the metal members are not rubbed against each other. Thus, the swing member 42 rotates smoothly.

The reinforcement member 47 is arranged along the back surface 431b of the insertion portion 431 (see Fig. 11 and Fig. 14). The rotation member 43 further includes a cylindrical portion 433 and an engagement portion 434 that protrude from the back surface 431b of the insertion portion 431 (see Fig. 11).

The reinforcement member 47 is a plate-type metal member. The reinforcement member 47 includes a coupling portion 471 and an engagement portion 472 (see Fig. 14). The coupling portion 471 is formed with an opening 470 into which the cylindrical portion 433 of the rotation member 43 is inserted.

The unit support member 44 is coupled to the insertion portion 431 of the rotation member 43 and the coupling portion 471 of the reinforcement member 47 by the plurality of bolts 46 (see Fig. 5 and Fig. 6).

More specifically, the unit support member 44 and the coupling portion 471 of the reinforcement member 47 are coupled by the plurality of bolts 46, and the insertion portion 431 of the rotation member 43 is sandwiched between the unit support member 44 and the coupling portion 471.

Accordingly, the unit support member 44 is rotatable about the second axis line X2 together with the rotation member 43 and the reinforcement member 47.

The engagement portion 472 of the reinforcement member 47 engages with the engagement portion 434 of the rotation member 43. The engagement portion 472 and the engagement portion 434 prevent the rotation member 43 and the reinforcement member 47 from rattling in the rotation direction.

By coupling the unit support member 44 and the reinforcement member 47 each formed of metal, the unit support member 44, the rotation member 43, and the reinforcement member 47 are coupled firmly.

The insertion portion 431 of the rotation member 43 includes the third opening 430 that penetrates in the unit thickness direction (see Fig. 5 to Fig. 7, and Fig. 11). The third opening 430 is also an opening of the cylindrical portion 433 (see Fig. 11).

Similarly, the unit support member 44 includes a fourth opening 440 that penetrates in the unit thickness direction (see Fig. 5 and Fig. 6). The fourth opening 440 communicates with the third opening 430 in the unit thickness direction.

The image forming apparatus 10 further includes a cable 30 having one end connected to the display unit 3 (see Fig. 5). The cable 30 is wired from the control device 14 in the main body 1 to the display unit 3 via insides of the third opening 430 and the fourth opening 440 (see Fig. 5). Thus, the cable 30 can be wired in a short path. In addition, the insertion portion 431 and cylindrical portion 433 of the rotation member 43 serve to protect the cable 30.

The front plate portion 421 of the swing member 42 includes one or more first fitting portions 423 and one or more second fitting portions 424 (see Fig. 8 and Fig. 9). In the present embodiment, the first fitting portion 423 and the second fitting portion 424 are each a concave portion formed at an edge of the first opening 420.

In the present embodiment, the front plate portion 421 includes three first fitting portions 423 and three second fitting portions 424 that correspond to the three leaf springs 48.

The first fitting portions 423 fit with the leaf springs 48 when the display unit 3 is in the horizontally-long attitude. Fig. 8 shows a state where the first fitting portions 423 are engaged with the curved portions of the leaf springs 48. The fitting of the first fitting portions 423 with the leaf springs 48 is released when the display unit 3 rotates from the horizontally-long attitude to the vertically-long attitude.

The second fitting portions 424 fit with the curved portions of the leaf springs 48 when the display unit 3 is in the vertically-long attitude. The fitting of the second fitting portions 424 with the leaf springs 48 is released when the display unit 3 rotates from the vertically-long attitude to the horizontally-long attitude.

The leaf springs 48, the first fitting portions 423, and the second fitting portions 424 give a sense of a click to a hand of the user when rotating the display unit 3.

That is, when the display unit 3 rotates and reaches a position of the horizontally-long attitude, the leaf springs 48 and the first fitting portions 423 give a sense of a click to the hand of the user. When the display unit 3 rotates and reaches a position of the vertically-long attitude, the leaf springs 48 and the second fitting portions 424 give a sense of a click to the hand of the user.

By the sense of a click given to the hand of the user, the user stops the operation of rotating the display unit 3. Thus, a situation where an excessive rotational force is applied to the display unit 3 is avoided.

The reinforcement member 47 further includes a first convex portion 473 and a second convex portion 474 that protrude outwardly from the outer edge of the coupling portion 471 (see Fig. 14). Meanwhile, the swing member 42 includes a first latch portion 426 and a second latch portion 427 (see Fig. 5).

The first latch portion 426 latches the first convex portion 473 to latch the reinforcement member 47 at a position when the display unit 3 is in the horizontally-long attitude (see Fig. 5). The second latch portion 427 latches the second convex portion 474 to latch the reinforcement member 47 at a position when the display unit 3 is in the vertically-long attitude.

The reinforcement member 47 is an example of a metal member coupled to the rotation member 43. It is noted that the first latch portion 426 and the second latch portion 427 may alternatively latch the unit support member 44. The unit support member 44 is also an example of the metal member coupled to the rotation member 43.

The first latch portion 426, the second latch portion 427, the first convex portion 473, and the second convex portion 474 prevent an excessive force from being applied to the rotation member 43 formed of a synthetic resin.

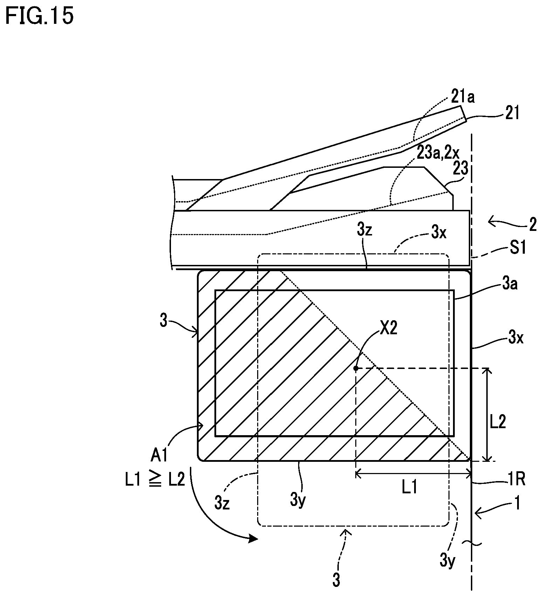

In descriptions below, a right side surface of the display unit 3 as viewed from the front surface side of the main body 1 when the display unit 3 is in the horizontally-long attitude will be referred to as a first end surface 3x (see Fig. 15 to Fig. 18).

Similarly, a lower surface of the display unit 3 as viewed from the front surface side of the main body 1 when the display unit 3 is in the horizontally-long attitude will be referred to as a second end surface 3y (see Fig. 15 to Fig. 18).

Similarly, an upper surface of the display unit 3 as viewed from the front surface side of the main body 1 when the display unit 3 is in the horizontally-long attitude will be referred to as a third end surface 3z (see Fig. 15 to Fig. 18).

Further, a vertical plane provided along a right side surface 1R of the main body 1 will be referred to as a right vertical plane S1 (see Fig. 15 to Fig. 18). In Fig. 15 to Fig. 18, the right vertical plane S1 is illustrated in a dash-dot line. Also in Fig. 15 to Fig. 18, the display unit 3 in the vertically-long attitude is illustrated in a virtual line (dash-dot-dot line).

Furthermore, a lower one of a document sheet placement surface 21a of the document sheet supply tray 21 and a document sheet placement surface 23a of the document sheet discharge tray 23 will be referred to as a lower placement surface 2x (see Fig. 15 to Fig. 18). In the present embodiment, the document sheet discharge tray 23 is arranged below the document sheet supply tray 21. Therefore, the document sheet placement surface 23a of the document sheet discharge tray 23 is the lower placement surface 2x.

As described above, the support mechanism 4 is fixed to the main body 1 and supports the display unit 3 such that the display unit 3 is rotatable about the second axis line X2. The second axis line X2 is an example of a specific straight line extending along the thickness direction of the display unit 3.

The support mechanism 4 supports the display unit 3 in a state where, when the display unit 3 is in the horizontally-long attitude, the first end surface 3x of the display unit 3 is set along the right vertical plane S1 when seen from the front surface side of the main body 1 (see Fig. 15 to Fig. 18). In other words, the display unit 3 is supported within the range of the width direction D1 of the main body 1 in the horizontally-long attitude. Of course, the dimension of the long side of the display unit 3 is smaller than the dimension of the main body 1 in the width direction D1.

Furthermore, when the display unit 3 is in the horizontally-long attitude, the support mechanism 4 supports the display unit 3 in a state where the third end surface 3z of the display unit 3 is positioned to be lower than the lower placement surface 2x when seen from the front surface side of the main body 1 (see Fig. 15 to Fig. 18).

Furthermore, also when the display unit 3 is in the vertically-long attitude, the support mechanism 4 supports the display unit 3 in a state where the upper surface of the display unit 3 is positioned to be lower than the lower placement surface 2x when seen from the front surface side of the main body 1 (see Fig. 15 to Fig. 18). It is noted that in the present embodiment, the first end surface 3x is the upper surface of the display unit 3 when the display unit 3 is in the vertically-long attitude.

Therefore, irrespective of which of the horizontally-long attitude and the vertically-long attitude the display unit 3 is in, the display unit 3 does not inhibit access to the document sheet supply tray 21 and the document sheet discharge tray 23.

In the present embodiment, the support mechanism 4 supports the display unit 3 such that the display unit 3 is rotatable counterclockwise from the horizontally-long attitude to the vertically-long attitude when seen from the front surface side of the main body 1 (see Fig. 15 to Fig. 18). The support mechanism 4 supports the display unit 3 such that the display unit 3 is rotatable clockwise from the vertically-long attitude to the horizontally-long attitude when seen from the front surface side of the main body 1.

In descriptions below, when the display unit 3 is in the horizontally-long attitude, a distance from the first end surface 3x of the display unit 3 to the second axis line X2 when seen from the front surface side of the main body 1 will be referred to as a right end distance L1 (see Fig. 15 to Fig. 18).

Further, when the display unit 3 is in the horizontally-long attitude, a distance from the second end surface 3y of the display unit 3 to the second axis line X2 when seen from the front surface side of the main body 1 will be referred to as a lower end distance L2 (see Fig. 15 to Fig. 18).

Furthermore, when the display unit 3 is in the horizontally-long attitude, a distance from the third end surface 3z of the display unit 3 to the second axis line X2 when seen from the front surface side of the main body 1 will be referred to as an upper end distance L3 (see Fig. 15 to Fig. 18).

### [First example of position of second axis line X2]

Hereinafter, a first example of the position of the second axis line X2 will be described with reference to Fig. 15.

In the first example, the right end distance L1 is equal to or larger than the lower end distance L2. In Fig. 15, a first area A1 is an area where the second axis line X2 may exist on the display unit 3 when the right end distance L1 is equal to or larger than the lower end distance L2.

When the first example is adopted, the display unit 3 fits within the range of the width direction D1 of the main body 1 irrespective of which of the horizontally-long attitude and the vertically-long attitude the display unit 3 is in. Thus, a situation where the display unit 3 becomes an obstacle due to the display unit 3 sticking out to the side of the main body 1 and a situation where an appearance of the image forming apparatus 10 is impaired are avoided.

### [Second example of position of second axis line X2]

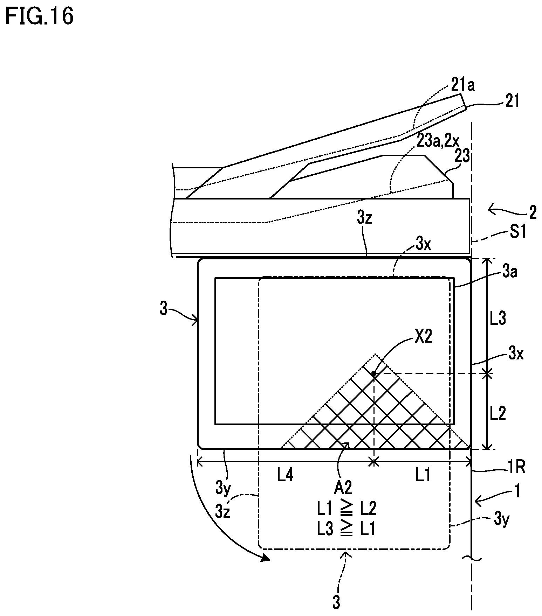

Next, a second example of the position of the second axis line X2 will be described with reference to Fig. 16.

In the second example, the right end distance L1 is equal to or larger than the lower end distance L2, and the upper end distance L3 is equal to or larger than the right end distance L1. In Fig. 16, a second area A2 is an area where the second axis line X2 may exist on the display unit 3 when the right end distance L1 is equal to or larger than the lower end distance L2 and the upper end distance L3 is equal to or larger than the right end distance L1.

Also when the second example is adopted, the display unit 3 fits within the range of the width direction D1 of the main body 1 irrespective of which of the horizontally-long attitude and the vertically-long attitude the display unit 3 is in.

Furthermore, when the second example is adopted, the upper surface of the display unit 3 when the display unit 3 is in the vertically-long attitude fits within a range that is equal to or lower than the position of the upper surface of the display unit 3 when the display unit 3 is in the horizontally-long attitude. Thus, there is no difference in the accessibility to the lower placement surface 2x between the horizontally-long attitude and the vertically-long attitude.

### [Third example of position of second axis line X2]

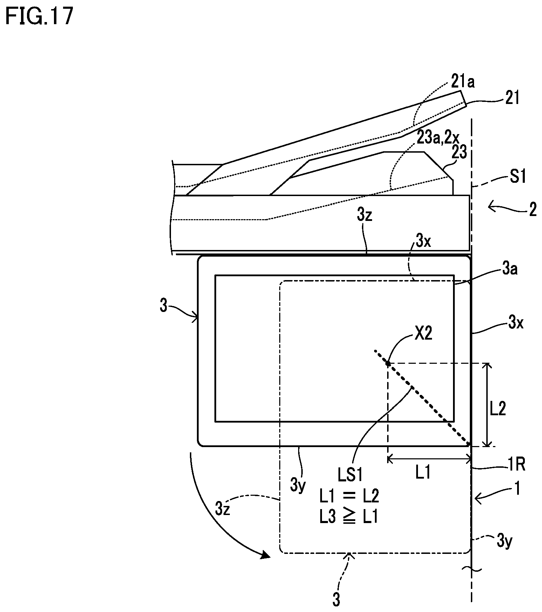

Next, a third example of the position of the second axis line X2 will be described with reference to Fig. 17.

In the third example, the right end distance L1 is equal to the lower end distance L2, and the upper end distance L3 is equal to or larger than the right end distance L1. In Fig. 17, a line segment LS1 is an area where the second axis line X2 may exist on the display unit 3 when the right end distance L1 is equal to the lower end distance L2 and the upper end distance L3 is equal to or larger than the right end distance L1.

When the third example is adopted, the support mechanism 4 supports the display unit 3 in a state where the right side surface of the display unit 3 is set along the right vertical plane S1 irrespective of which of the horizontally-long attitude and the vertically-long attitude the display unit 3 is in.

Furthermore, when the third example is adopted, the upper surface of the display unit 3 when the display unit 3 is in the vertically-long attitude fits within a range that is equal to or lower than the position of the upper surface of the display unit 3 when the display unit 3 is in the horizontally-long attitude.

### [Fourth example of position of second axis line X2]

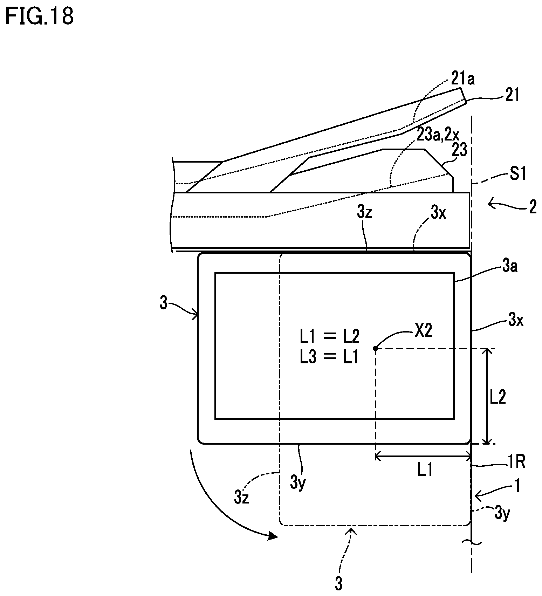

Next, a fourth example of the position of the second axis line X2 will be described with reference to Fig. 18.

In the fourth example, the right end distance L1 is equal to the lower end distance L2, and the upper end distance L3 is equal to the right end distance L1.

When the fourth example is adopted, the support mechanism 4 supports the display unit 3 in a state where the right side surface of the display unit 3 is set along the right vertical plane S1 irrespective of which of the horizontally-long attitude and the vertically-long attitude the display unit 3 is in.

Furthermore, when the fourth example is adopted, the height of the upper surface of the display unit 3 when the display unit 3 is in the vertically-long attitude is the same as the height of the upper surface of the display unit 3 when the display unit 3 is in the horizontally-long attitude.

By adopting the fourth example, it is possible to avoid a situation where the appearance of the image forming apparatus 10 is impaired due to the rotation of the display unit 3.

### [First application example]

Next, a first application example of the image forming apparatus 10 will be described. Hereinafter, descriptions will be given on points of the present application example that differ from those of the embodiment described above.

In the support mechanism 4 in the present application example, the rotation direction of the display unit 3 about the second axis line X2 differs from that of the support mechanism 4 in the embodiment described above.

That is, the support mechanism 4 in the present application example supports the display unit 3 such that the display unit 3 is rotatable clockwise from the horizontally-long attitude to the vertically-long attitude when seen from the front surface side of the main body 1. Furthermore, the support mechanism 4 supports the display unit 3 such that the display unit 3 is rotatable counterclockwise from the vertically-long attitude to the horizontally-long attitude when seen from the front surface side of the main body 1.

In the present application example, the right end distance L1 is equal to or larger than the upper end distance L3. By adopting the present application example, effects similar to those of the case where the first example is adopted can be obtained.

### [Second application example]

Next, a second application example of the image forming apparatus 10 will be described. Hereinafter, descriptions will be given on points of the present application example that differ from those of the embodiment described above.

The support mechanism 4 in the present application example supports the display unit 3 rotatably about the second axis line X2 in the same orientation as in the first application example.

Hereinafter, when the display unit 3 is in the horizontally-long attitude, a distance from a left side surface of the display unit 3 to the second axis line X2 when seen from the front surface side of the main body 1 will be referred to as a left end distance L4 (see Fig. 18).

In the present application example, the right end distance L1 is equal to or larger than the upper end distance L3, and the upper end distance L3 is equal to or larger than the left end distance L4.

When the present application example is adopted, effects similar to those of the case where the second example is adopted can be obtained.

### [Third application example]

Next, a third application example of the image forming apparatus 10 will be described. Hereinafter, descriptions will be given on points of the present application example that differ from those of the embodiment described above.

The support mechanism 4 in the present application example supports the display unit 3 rotatably about the second axis line X2 in the same orientation as in the first application example.

In the present application example, the right end distance L1 is the same as the upper end distance L3, and the upper end distance L3 is equal to or larger than the left end distance L4.

When the present application example is adopted, effects similar to those of the case where the third example is adopted can be obtained.

### [Fourth application example]

Next, a fourth application example of the image forming apparatus 10 will be described. Hereinafter, descriptions will be given on points of the present application example that differ from those of the embodiment described above.

The support mechanism 4 in the present application example supports the display unit 3 rotatably about the second axis line X2 in the same orientation as in the first application example.

In the present application example, the right end distance L1 is the same as the upper end distance L3, and the upper end distance L3 is the same as the left end distance L4.

When the present application example is adopted, effects similar to those of the case where the fourth example is adopted can be obtained.

It is to be understood that the embodiments herein are illustrative and not restrictive, since the scope of the disclosure is defined by the appended claims rather than by the description preceding them, and all changes that fall within metes and bounds of the claims, or equivalence of such metes and bounds thereof are therefore intended to be embraced by the claims.

## Claims

1. An image forming apparatus (10), comprising:
a main body (1) which incorporates therein a printing device (13) which forms an image on a sheet;
a display unit (3) which includes a rectangular screen and has a rectangular outline corresponding to the screen; and
a support mechanism (4) which is fixed to the main body (1) and supports the display unit (3) such that the display unit (3) is rotatable about a specific straight line provided along a thickness direction of the display unit (3), wherein
the support mechanism (4) supports the display unit (3) such that the display unit (3) is rotatable about the specific straight line between a horizontally-long attitude in which the outline becomes horizontally long and a vertically-long attitude in which the outline becomes vertically long,
the support mechanism (4) further supports the display unit (3) in a state where, when the display unit (3) is in the horizontally-long attitude, a right side surface of the display unit (3) is set along a vertical plane provided along a right side surface of the main body (1) when seen from a front surface side of the main body (1),
the support mechanism (4) further supports the display unit (3) such that the display unit (3) is rotatable counterclockwise from the horizontally-long attitude to the vertically-long attitude when seen from the front surface side of the main body (1),
the support mechanism (4) further supports the display unit (3) such that the display unit (3) is rotatable clockwise from the vertically-long attitude to the horizontally-long attitude when seen from the front surface side of the main body (1), and
when the display unit (3) is in the horizontally-long attitude, a distance from the right side surface of the display unit (3) to the specific straight line is equal to or larger than a distance from a lower surface of the display unit (3) to the specific straight line when seen from the front surface side of the main body (1).

2. The image forming apparatus (10) according to claim 1, further comprising:
a document sheet conveying device (2) which is arranged above the main body (1), includes a document sheet supply tray (21) and a document sheet discharge tray (23), conveys a document sheet on the document sheet supply tray (21) along a conveying path, and further discharges the document sheet from the conveying path onto the document sheet discharge tray (23); and
an image sensor (151) which is housed inside the main body (1) and reads an image from the document sheet conveyed by the document sheet conveying device (2), wherein
the support mechanism (4) supports the display unit (3) in a state where, irrespective of which of the horizontally-long attitude and the vertically-long attitude the display unit (3) is in, an upper surface of the display unit (3) is positioned to be lower than a document sheet placing surface of the document sheet supply tray (21) and the document sheet discharge tray (23) when seen from the front surface side of the main body (1).

3. The image forming apparatus (10) according to claim 1, wherein
when the display unit (3) is in the horizontally-long attitude, a distance from an upper surface of the display unit (3) to the specific straight line is equal to or larger than the distance from the right side surface of the display unit (3) to the specific straight line when seen from the front surface side of the main body (1).

4. An image forming apparatus (10), comprising:
a main body (1) which incorporates therein a printing device (13) which forms an image on a sheet;
a display unit (3) which includes a rectangular screen and has a rectangular outline corresponding to the screen; and
a support mechanism (4) which is fixed to the main body (1) and supports the display unit (3) such that the display unit (3) is rotatable about a specific straight line provided along a thickness direction of the display unit (3), wherein
the support mechanism (4) supports the display unit (3) such that the display unit (3) is rotatable about the specific straight line between a horizontally-long attitude in which the outline becomes horizontally long and a vertically-long attitude in which the outline becomes vertically long,
the support mechanism (4) further supports the display unit (3) in a state where, when the display unit (3) is in the horizontally-long attitude, a right side surface of the display unit (3) is set along a vertical plane provided along a right side surface of the main body (1) when seen from a front surface side of the main body (1),
the support mechanism (4) further supports the display unit (3) such that the display unit (3) is rotatable clockwise from the horizontally-long attitude to the vertically-long attitude when seen from the front surface side of the main body (1),
the support mechanism (4) further supports the display unit (3) such that the display unit (3) is rotatable counterclockwise from the vertically-long attitude to the horizontally-long attitude when seen from the front surface side of the main body (1), and
when the display unit (3) is in the horizontally-long attitude, a distance from the right side surface of the display unit (3) to the specific straight line is equal to or larger than a distance from an upper surface of the display unit (3) to the specific straight line when seen from the front surface side of the main body (1).

5. The image forming apparatus (10) according to claim 4, further comprising:
a document sheet conveying device (2) which is arranged above the main body (1), includes a document sheet supply tray (21) and a document sheet discharge tray (23), conveys a document sheet on the document sheet supply tray (21) along a conveying path, and further discharges the document sheet from the conveying path onto the document sheet discharge tray (23); and
an image sensor (151) which is housed inside the main body (1) and reads an image from the document sheet conveyed by the document sheet conveying device (2), wherein
the support mechanism (4) supports the display unit (3) in a state where, irrespective of which of the horizontally-long attitude and the vertically-long attitude the display unit (3) is in, the upper surface of the display unit (3) is positioned to be lower than a document sheet placing surface of the document sheet supply tray (21) and the document sheet discharge tray (23) when seen from the front surface side of the main body (1).

6. The image forming apparatus (10) according to claim 5, wherein
when the display unit (3) is in the horizontally-long attitude, the distance from the upper surface of the display unit (3) to the specific straight line is equal to or larger than a distance from a left side surface of the display unit (3) to the specific straight line when seen from the front surface side of the main body (1).
